# EUROPEAN PATENT SPECIFICATION

(11) **EP 3 346 657 B1**
(45) Date of publication and mention of the grant of the patent: **30.12.2020**
(21) Application number: 16862307.2
(22) Date of filing: 17.10.2016
(51) Int. Cl.: H04L 27/26, H04L 25/03, H04B 1/7073, H04B 1/71, H04W 74/00, H04L 7/00, H04L 7/08, H04B 1/10

(54) **METHOD FOR OBTAINING SIGNAL AND APPARATUS PERFORMING SAME**
VERFAHREN ZUM ERHALT EINES SIGNALS UND VORRICHTUNG ZUR DURCHFÜHRUNG DESSELBEN
PROCÉDÉ D'OBTENTION D'UN SIGNAL ET APPAREIL METTANT EN OEUVRE CELUI-CI

(30) Priority: 03.11.2015 KR 20150153558
(43) Date of publication of application: 11.07.2018
(73) Proprietor: Samsung Electronics Co., Ltd., Suwon-si, Gyeonggi-do 16677 (KR)
(72) Inventor: VDOVYCHENKO, Iegor, Kharkiv 61144 (UA); BUT, Andrii, Novopskov Luganskaya oblast 92300 (UA); FEDORIN, Illia, Kharkiv 61058 (UA); SAFONOV, Ivan, Kharkiv 61166 (UA); GRYSHCHENKO, Sergii, Kharkiv 61172 (UA); BULYGIN, Vitaliy, Kharkiv 61100 (UA)
(74) Representative: HGF
(86) International application number: PCT/KR2016/011614
(87) International publication number: WO 2017/078289

(56) References cited:
- WO-A1-03/021902
- US-A- 5 999 561
- US-A1- 2007 057 718
- US-A1- 2010 118 921
- US-A1- 2011 305 306
- US-A1- 2013 102 254
- US-A1- 2015 022 397
- US-B1- 7 388 541
- MILSTEIN L B: "INTERFERENCE REJECTION TECHNIQUES IN SPREAD SPECTRUM COMMUNICATIONS", PROCEEDINGS OF THE IEEE, IEEE. NEW YORK, US, vol. 76, no. 6, 1 June 1988 (1988-06-01), pages 657-671, XP001093181, ISSN: 0018-9219, DOI: 10.1109/5.4455

## Description

### [Technical Field]

The present invention relates to a method for acquiring a signal and an electronic apparatus for providing the same, and more particularly, to an electronic apparatus for acquiring a desired signal through a specific algorithm.

### [Background Art]

In case of broadband wireless communication systems, effective transmission and reception techniques and utilization schemes have been proposed in order to maximize the efficiency of limited radio resources. One of systems considered in the next generation wireless communication system is an orthogonal frequency division multiplexing (OFDM) system capable of attenuating an inter-symbol interference (ISI) effect with low complexity. The OFDM system converts serially inputted data symbols into N parallel data symbols and transmits them on N subcarriers.

In such a broadband wireless communication system, a radio receiver may have a cross-correlator. For example, the cross-correlator converts an electromagnetic pulse train of monocycle pulses into single-stage baseband signals. Each data bit modulates a plurality of pulses of periodic timing signals, based on a time position. This yields modulation-coded timing signals that contain the same pulse train for each single data bit. The cross-correlator of the radio receiver integrates multiple pulses to recover transmitted information.

US 7388541 B1 discloses a broadcast digital transmission (BDT) receiver, computer-readable media, and associated method for receiving and processing of BDT signals from a plurality of transmitters. A BDT receiver includes an antenna to intercept broadcast radio signals and an analog front- end to down-convert it to a suitable frequency for digitization. A baseband signal processor acquires and tracks designated codes in BDT signals using a generalized correlator to produce time of arrival measurements thereof. A data processor, coupled to the baseband signal processor and with input from an auxiliary sensor and a digital database, first calibrates time offsets of said transmitters relative to the BDT receiver's time base and then operates on offset-adjusted time of arrival measurements to produce a position solution.

US 5999561 A discloses a method, apparatus, computer-based product and system which employs a digital receiver (or transceiver) to receive, digitize and process a direct sequence spread spectrum signal using efficient, low-cost digital signal processing components. A radio front end portion of the receiver receives and digitizes the signal, and a digital signal processing portion downconverts and despreads the signal by applying a pseudorandom noise (PN) code, used at a transmitter to spread a data signal contained in the direct sequence spread spectrum signal, to the received signal. In order to initially align, and maintain alignment of, the PN code with the direct sequence spread spectrum signal, a timing and state control mechanism is included that provides time reference correction information to the signal processing components of the receiver. This time reference correction information allows the receiver to be compatible with transmitters using inaccurate frequency references which impart a significant frequency ambiguity in the received signal. Additional features include computer-based synchronization methods and mechanisms suitable for use for low performance digital signal processors and employ power management mechanisms that enable long-term operation using battery power. The power management mechanisms enable the receiver to operate in a network setting, over the course of multiple years off battery power, with similar receivers, transmitters and transceiver that communicate with one another using direct sequence spread spectrum signals.

US 2015/022397 A1 discloses asynchronous Global Positioning System (GPS) baseband processor architectures with a focus on minimizing power consumption. All subsystems run at their natural frequency without clocking and all signal processing is done on-the-fly.

### [Disclosure of Invention]

### [Technical Problem]

Various algorithms are used in a method for acquiring a desired signal through the radio receiver. However, the existing algorithms require tracking the phase of received signals and synchronization thereof, requires a threshold decision value that is proportional to a correlation value between an input signal and a given signal, or requires many variable values so as to reduce noise factors. These algorithms have a low signal-to-noise ratio (SNR) and are less likely to receive a desired signal.

Accordingly, a method and apparatus according to various embodiments to be described below are provided to reduce the above problems.

### [Solution to Problem]

The invention is defined by the independent claims. Further aspects of the invention are outlined in the dependent claims. When the term "embodiment" is used for describing an unclaimed combination of features, it has to be understood as referring to examples useful for understanding the present invention.

### [Advantageous Effects of Invention]

According to an embodiment of the present invention, it is possible to increase the SNR of accumulated correlation values by filtering narrowband interference factors.

According to one embodiment of the present invention, it is possible to increase the probability of acquiring a desired signal by using a least square method.

### [Brief Description of Drawings]

FIG. 1 is a block diagram illustrating an apparatus according to various embodiments of the present invention.
FIG. 2 is a block diagram illustrating a signal correlation unit of an apparatus according to various embodiments of the present invention.
FIGS. 3A to 3E are block diagrams illustrating a multipath of an apparatus according to various embodiments of the present invention.
FIG. 4 is a block diagram for detecting an error signal of an apparatus according to various embodiments of the present invention.
FIG. 5 is a block diagram illustrating an apparatus according to various embodiments of the present invention.
FIG. 6 shows a resultant screen by a non-coherent block unit according to various embodiments of the present invention.
FIG. 7 shows a resultant screen by a maximum signal verification unit according to various embodiments of the present invention.
FIGS. 8A to 8D show utilizing examples of an apparatus according to various embodiments of the present invention.
FIG. 9 is a flow diagram for signal acquisition of an apparatus according to various embodiments of the present invention.
FIGS. 10A to 10C show results of signal acquisition of an apparatus according to various embodiments of the present invention.

### [Mode for the Invention]

Hereinafter, various embodiments of the present disclosure are described with reference to the accompanying drawings. It should be understood that embodiments and terminology used therein are not intended to limit the disclosed technique to particular implementation, but various modifications, equivalents, and/or alternatives of the embodiments are included. In the description of the drawings, like reference numerals may be used for similar elements.

In this disclosure, the terms such as "comprise", "include", and "have" denote the presence of stated elements, components, operations, functions, features, and the like, but do not exclude the presence of or a possibility of addition of one or more other elements, components, operations, functions, features, and the like.

In this disclosure, the expressions "A or B", "at least one of A and/or B", and the like may include all possible combinations of items listed together. For example, "A or B", "at least one of A and B", or "at least one of A or B" may indicate all of (1) including at least one A, (2) including at least one B, and 3) including both of at least one A and at least one B.

The expressions including ordinal numbers, such as "first" and "second," may indicate various elements. The above expressions do not limit the sequence or importance of the elements, and are used merely for the purpose to distinguish one element from the others. For example, a first electronic device and a second electronic device may indicate different electronic devices regardless of the sequence or importance thereof. For example, without departing from the scope of the present disclosure, a first element may be referred to as a second element, and similarly a second element may be also referred to as a first element.

When a certain element (e.g., first element) is referred to as being "connected" or "coupled" (operatively or communicatively) to another element (e.g., second element), it may mean that the first element is connected or coupled directly to the second element or indirectly through any other element (e.g., third element). On the other hand, when a certain element (e.g., first element) is referred to as being "directly connected" or "directly coupled" to another element (e.g., second element), it may be understood that there is no element (e.g., third element) therebetween.

The expression "configured to" may be interchangeably used with any other expressions "suitable for", "having the ability to", "designed to", "adapted to", "made to", "being able to", and "capable of". The expression "device configured to" may mean that the device, together with other devices or components, "is able to". For example, the phrase "processor configured to perform A, B and C" may mean a dedicated processor (e.g., embedded processor) for performing corresponding operations or a generic-purpose processor (e.g., central processing unit (CPU) or application processor (AP)) capable of performing corresponding operations by executing one or more software programs stored in a memory.

Terms used herein may be merely to describe a certain embodiment, and may not be intended to limit the scope of other embodiments. The singular expressions may include plural expressions unless the context clearly dictates otherwise. Terms used herein, including technical or scientific terms, may have the same meaning as commonly understood by those skilled in the art. Some terms defined in a normal dictionary may be interpreted as having the same or similar meaning as the contextual meanings in the related art. Certain terms are not to be construed as an ideal or overly formal sense unless expressly defined to the contrary herein. In some cases, the terms defined herein cannot be construed to exclude embodiments of the present disclosure.

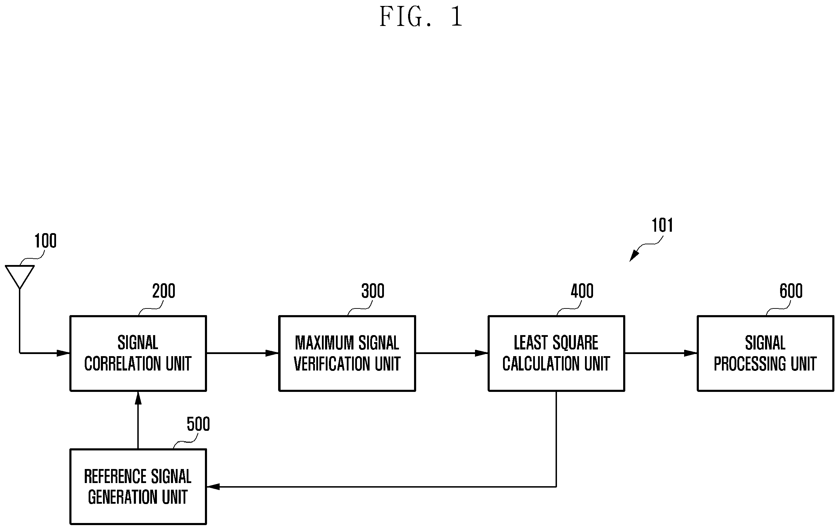

FIG. 1 is a block diagram illustrating an electronic apparatus 101 according to various embodiments of the present invention.

The electronic apparatus 101 according to various embodiments of the present invention may include an antenna 100, a signal correlation unit 200, a maximum signal verification unit 300, a least square calculation unit 400, a reference signal generation unit 500, and a signal processing unit 600.

The antenna 100 according to an embodiment of the present invention may receive a signal from an external device through at least one channel. The antenna 100 according to an embodiment may deliver the received signal to the signal correlation unit 200 through a transmission line.

The signal correlation unit 200 according to an embodiment of the present invention may calculate a correlation value between a signal received from the antenna 100 and a reference signal received from the reference signal generation unit 500. Here, the calculation of the correlation value may be measuring similarity through cross-correlation of two signals. For example, the correlation value may be a value converted into a baseband signal by integration over time of cross-correlation of two signals.

The signal correlation unit 200 according to an embodiment may accumulate a cross-correlation value and remove noise for a desired signal. For example, by sampling a jamming signal having a regularity that causes interference of signals through cross-correlation, the influence of the jamming signal may be eliminated.

The signal correlation unit 200 according to an embodiment of the present invention may include a filter for removing (i.e., notching) narrowband interference. The filter according to an embodiment may remove narrowband interference, based on a threshold value of narrowband harmonic noise or a bandwidth of noise. For example, if the value of a noise spectrum is greater than the threshold value or if the bandwidth of the noise spectrum is not greater than the threshold value, it may be adjusted to match a predetermined value by the filter.

The signal correlation unit 200 according to an embodiment of the present invention may be configured as a correlator having a plurality of channels. This correlator having the plurality of channels may calculate a cross-correlation between an input process of two signals and a reference form and eliminate narrowband interference.

The signal correlation unit 200 according to an embodiment of the present invention may calculate the correlation value, based on detection of repeatability of a time position where the correlation value is maximized and signal energy accumulated in a plurality of channels by the maximum signal verification unit 300 and the least square calculation unit 400.

The maximum signal verification unit 300 according to various embodiments of the present invention may identify a time value corresponding to the correlation value that is calculated by the signal correlation unit 200 and exceeds a predetermined reference value. The maximum signal verification unit 300 according to an embodiment may deliver the identified time value to the least square calculation unit 400. For example, when the correlation value calculated by the signal correlation unit 200 is a maximum value (e.g., 0.5 or more, 0.7 or more), the maximum signal verification unit 300 may determine a time value corresponding to the maximum value.

The least square calculation unit 400 according to various embodiments of the present invention may calculate at least one of a frequency value and a phase value, based on the identified time value, and deliver the calculated value(s) to the reference signal generation unit 500. The least square calculation unit 400 according to an embodiment may calculate at least one of the frequency value and the phase value, based on a least square method (LSM). Here, the LSM may be based on the identified time value, a value corresponding to a reference time, and a time sequence value.

The reference signal generation unit 500 according to various embodiments of the present invention may generate a reference signal, based on the frequency related values, and deliver the reference signal to the signal correlation unit 200.

The reference signal generation unit 500 according to an embodiment of the present invention may include at least one of a phase modulator, a quadrature demodulator, and an analog-to-digital converter (ADC). The phase modulator according to an embodiment may modulate the phase of an input signal (e.g., harmonic oscillation). For example, phase modulation may be performed through a pseudorandom sequence or the like. The modulated phase may be delivered as an input of the quadrature demodulator. The quadrature demodulator may produce a signal through a zero-frequency scheme. The produced signal may be converted into a binary signal through the ADC. Although the reference signal generation unit 500 is described as a structure for binarizing a signal to generate a reference signal, it is not limited to this structure. Another structure may be added or a part of the above structure may be omitted.

Signals may be transmitted and received in various spectrum schemes. For example, signals may be transmitted and received through a frequency hopping spread spectrum (FHSS) scheme, a direct sequence spread spectrum (DSSS) scheme, or the like. The FHSS scheme is to communicate by varying a frequency position at a transmitting end and a receiving end. The DSSS scheme is to transmit and receive signals through a promised value (e.g., a bit value) at the transmitting end and the receiving end.

The reference signal generation unit 500 according to an embodiment may generate a reference signal, based on a previously stored value. For example, the pre-stored value may be obtained directly from the ADC equipped in the electronic apparatus 101 or may be a value simulated through mathematical software. When a signal is received, the reference signal generation unit 500 according to an embodiment may generate the reference signal in real time. For example, while signals including noise, interference, etc. are received, the reference signal generation unit 500 may generate the reference signal when or just before a specific signal is recognized. For example, in case of the DSSS scheme, the specific signal may be a signal determined based on an error value calculated through a dispreading process.

The signal processing unit 600 according to various embodiments of the present invention may process a signal, based on the correlation value calculated from the signal correlation unit 200, the maximum signal verification unit 300, and the least square calculation unit 400. Here, processing of the signal may be acquiring a signal (e.g., a true signal) desired by the electronic apparatus 101.

For example, in a cellular system, a base station that desires to transmit a certain signal to a terminal may use a public land mobile network (PLMN) code that is a unique identifier of the terminal (e.g., the electronic apparatus 101). In another example, the terminals that desire to transmit information to each other may check a media access control (MAC) address of a terminal to identify whether the terminal is a desired counterpart one. In still another example, the terminals may periodically transmit and receive a search signal (e.g., a beacon signal) to and from each other and previously store an identifier of a counterpart terminal. The electronic apparatus 101 according to an embodiment may determine, based on a previously stored identifier of an external electronic device, a signal received from the external electronic device as a desired signal.

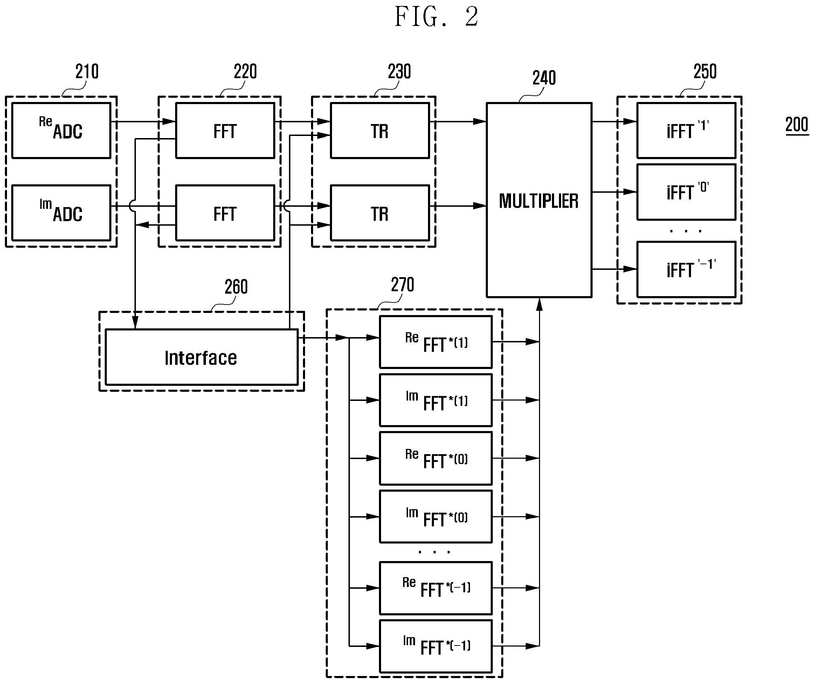

FIG. 2 is a block diagram illustrating a signal correlation unit 200 of an electronic apparatus 101 according to various embodiments of the present invention.

The signal correlation unit 200 according to an embodiment of the present invention may include at least one of an analog-to-digital converter (ADC) 210, a fast Fourier transformer (FFT) 220, a filter (or referred to as a threshold rejecter (TR)) 230, of a multiplier 240, an inverse fast Fourier transformer (IFFT) 250, an interface 260, and a second FFT 270.

The ADC 210 according to an embodiment may convert an analog signal received from the antenna 100 into a digital signal. The ADC 210 according to an embodiment may deliver the converted digital signal to the FFT 220. The ADC 210 according to an embodiment may perform sampling, quantization, and coding.

The FFT 220 according to an embodiment may convert a received signal into a frequency domain through fast Fourier transform. For example, the fast Fourier transform may be a transformation that expresses one wave as the sum of a plurality of simple waves such as a frequency, an amplitude, and a pattern. The FFT 200 according to an embodiment may deliver the converted signal to the filter 230 and the interface 260.

The filter 230 according to an embodiment may receive signals from the FFT 220 and the interface 260. The filter 230 according to an embodiment may remove narrowband interference. For example, the filter 230 may remove a narrowband harmonic interference signal. The filter 230 according to an embodiment may adjust the bandwidth and block threshold of narrowband noise. In a further example, before the narrowband is blocked, the signal correlation unit 200 may analyze the bandwidth of noise and determine whether it is noise.

The multiplier 240 and the IFFT 250 according to an embodiment of the present invention may receive signals from the filter 230 and the second FFT 270 and perform multiplication. The IFFT 250 according to an embodiment may convert a signal received from the multiplier 240 into a time domain.

The multiplier 240 according to an embodiment may multiply a signal received from the antenna 100 by the reference signal. According to another embodiment, the multiplier 240 may be included in the signal correlation unit 200 or may be configured as a separate device.

The interface 260 according to an embodiment of the present invention may receive a signal from the FFT 220. Based on the received signal, the interface 260 may configure a threshold interference value to be removed and a bandwidth related value of noise and then deliver them to the filter 230.

The second FFT 270 according to an embodiment of the present invention may perform Fourier transform on a signal received from the interface 260 to the frequency domain and then deliver it to the multiplier 240.

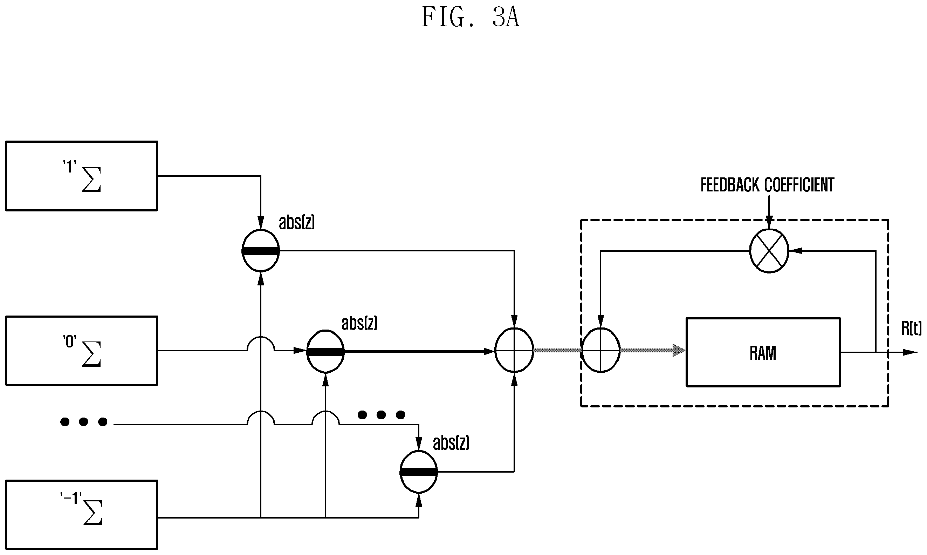

FIGS. 3A to 3E are block diagrams illustrating a multipath of an electronic apparatus 101 according to various embodiments of the present invention.

The electronic apparatus 101 according to an embodiment of the present invention may acquire a signal through accumulation of a signal energy in a multipath range. The electronic apparatus 101 according to an embodiment may acquire the signal by detecting the repeatability of a time position of a correlation maximum value within a cycle of scanning an uncertainty region.

In the electronic apparatus 101 according to an embodiment, non-coherent accumulation systems may be combined. For example, correlation values acquired from the output of the IFFT (e.g., 250) may be delivered to a non-coherent accumulator.

In FIG. 3A, abs(z) may denote an absolute value for a real number z or a complex number z. The non-coherent accumulation systems may be combined and delivered to a memory (e.g., random access Memory (RAM), etc.).

The RAM according to an embodiment of the present invention may calculate an accumulated correlation value (e.g., R(t)), based on a received feedback coefficient and a value calculated by the non-coherent accumulation system.

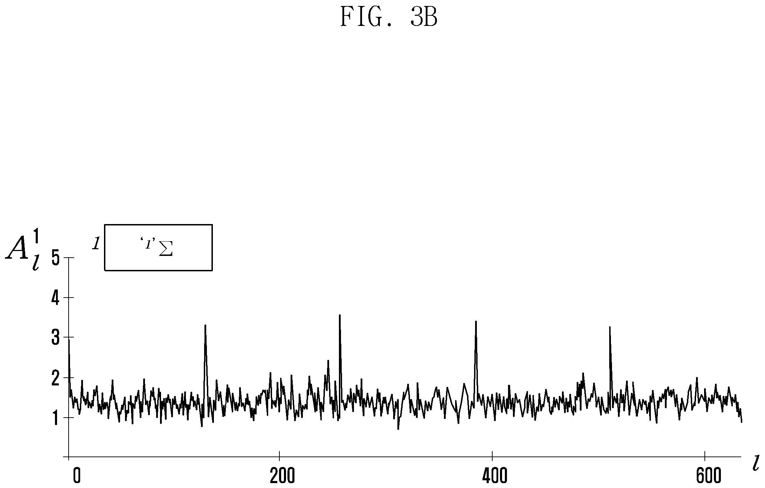

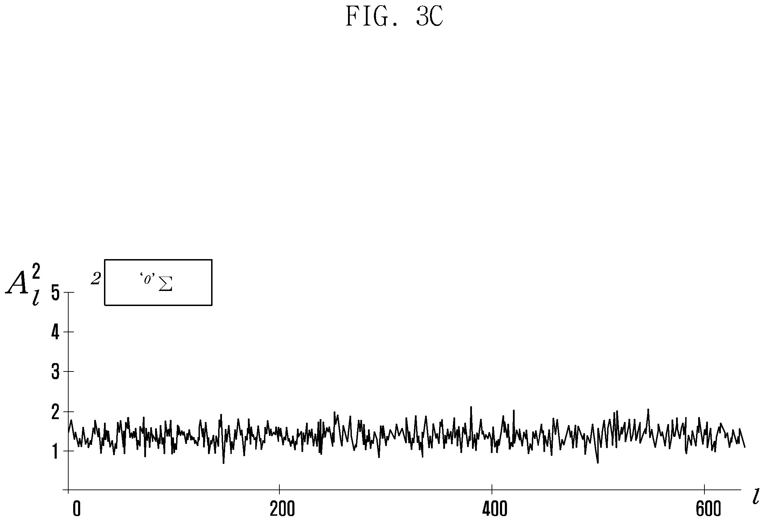

Referring to FIGS. 3B and 3C, shown is the accumulation of a signal energy in a range of multiple paths. For example, the correlation value acquired from the output of the IFFT (e.g., 250) may be delivered to a non-coherent accumulator. This may be summed by any coefficient to reduce the acquisition of erroneous signals. In FIGS. 3B and 3C, '1' denotes a coefficient, and Al1 and A12 denote the outputs of the non-coherent accumulator.

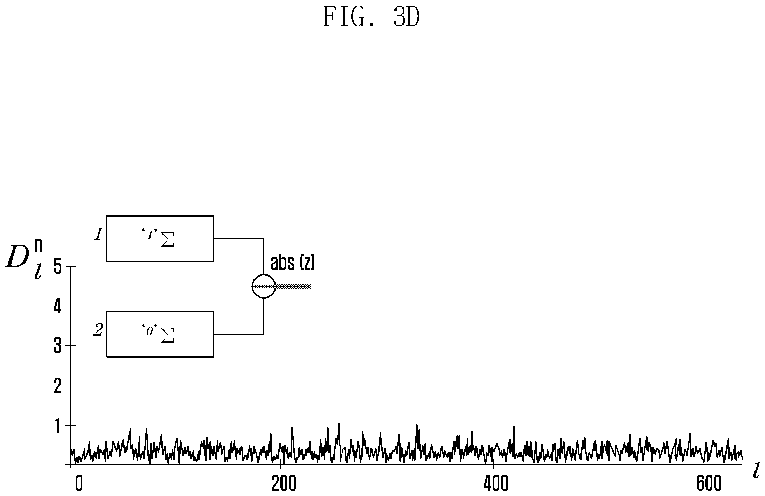

Referring to FIG. 3D, it is possible to calculate the subtraction of values outputted respectively as shown in FIGS. 3B and 3C and to identify the absolute value abs(z) for the calculated subtraction. FIG. 3D shows the absolute value (Dln) for the subtraction between the values of Al1 and Al2.

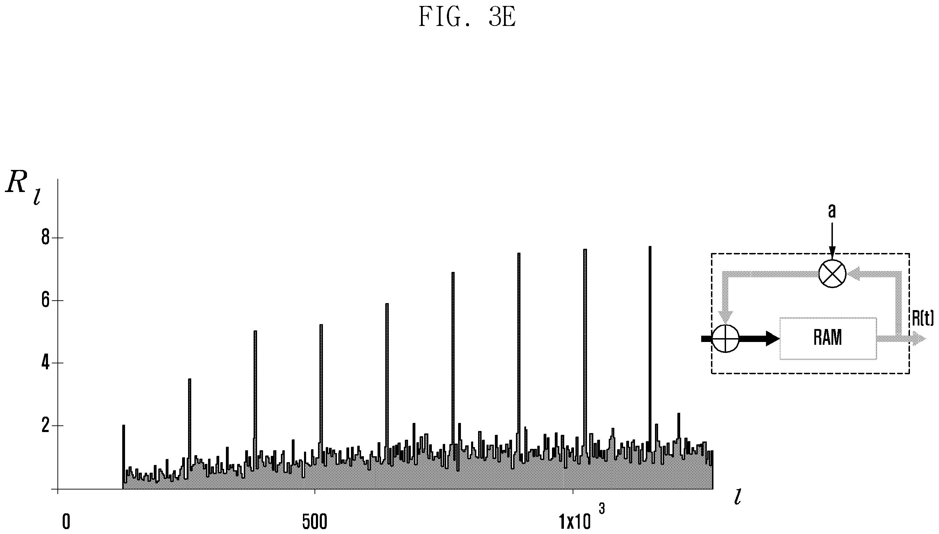

Referring to FIG. 3E, Rl through a non-coherent block unit may be identified. The Rl may be a value obtained by adding Rl x coefficient (e.g., c<1) to the Dln value. Also, R(t) may be an accumulated correlation function value.

The electronic apparatus 101 according to an embodiment may acquire a desired signal through the binarization of a value outputted from the non-coherent block unit and through the least square calculation unit.

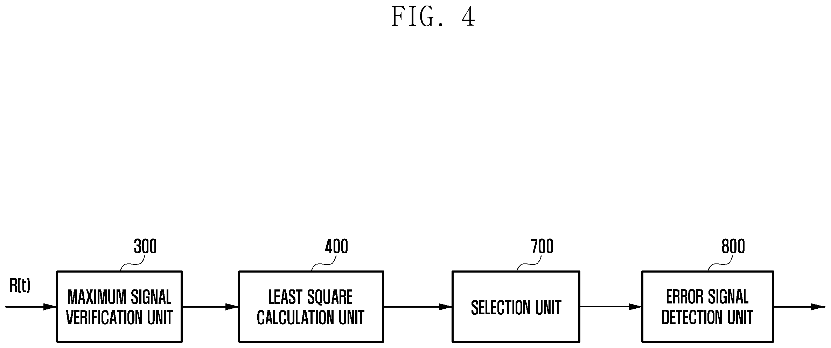

FIG. 4 is a block diagram for detecting an error signal of an electronic apparatus 101 according to various embodiments of the present invention.

The electronic apparatus 101 according to an embodiment of the present invention may include the maximum signal verification unit 300, the least square calculation unit 400, a selection unit 700, and an error signal detection unit 800.

The maximum signal verification unit 300 according to an embodiment of the present invention may receive the calculated correlation value from the signal correlation unit 200. The maximum signal verification unit 300 according to an embodiment may verify whether the received correlation value exceeds a predetermined reference value, and then identify a time value corresponding to the verified value.

The maximum signal verification unit 300 according to an embodiment of the present invention may deliver the identified signal value to the least square calculation unit 400. Based on the signal value received from the maximum signal verification unit 300, the least square calculation unit 400 according to an embodiment may calculate a frequency, a phase, etc. through the least square method.

The selection unit 700 according to an embodiment of the present invention may determine a channel selection. The selection unit 700 according to an embodiment may perform a channel selection before the positional repetition of an uncertainty region is detected.

The error signal detection unit 800 according to an embodiment of the present invention may receive signals from the maximum signal verification unit 300 and the selection unit 700 and detect an error signal.

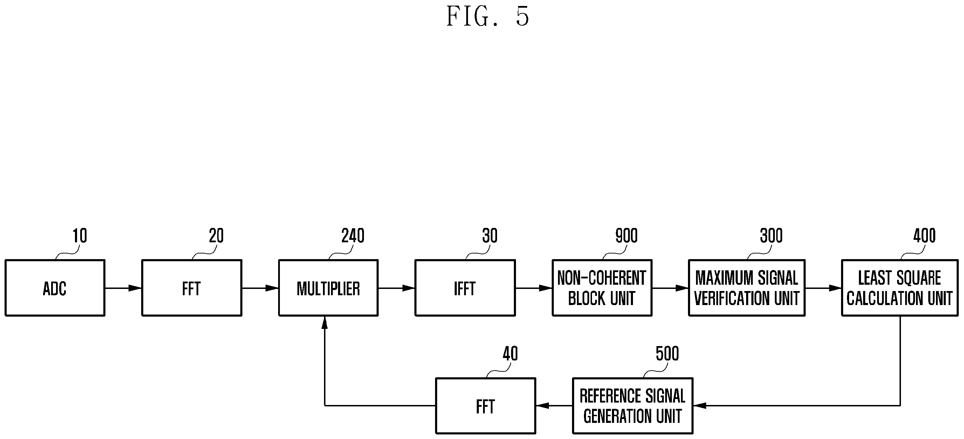

FIG. 5 is a block diagram illustrating an electronic apparatus 101 according to various embodiments of the present invention.

The electronic apparatus 101 according to an embodiment of the present invention may include an analog-to-digital converter (ADC) 10, a fast Fourier transformer (FFT) 20, the multiplier 240, an inverse fast Fourier transformer (IFFT) 30, a non-coherent block unit 900, the maximum signal verification unit 300, the least square calculation unit 400, the reference signal generation unit 500, and a second FFT 40.

The electronic apparatus 101 according to an embodiment may convert a signal into a digital signal through the ADC 10. The FFT 20 according to an embodiment may convert a signal received from the ADC 10 into a frequency domain. The FFT 20 according to an embodiment may use the Winer-Khinchin theory algorithm, the Cooley-Tukey algorithm, the prime factor algorithm (PFA), the Bruun's FFT algorithm, or the like. For example, used is the divide- and-conquer algorithm in which the discrete Fourier transform (DFT) of n size is divided into two DFTs of sizes n1 and n2 (n=n1+n2) and recursively results are combined at time O(n).

In a further example, the Wiener-Khinchin theory shows that the Fourier transform of autocorrelation function for all signals is equal to the power energy spectrum function. Also, the Wiener-Khinchin theory shows that the Fourier transform of autocorrelation function of a power random signal is equal to power spectral density.

The multiplier 240 according to an embodiment of the present invention may multiply signals received from the FFT 20 and the second FFT 40 by a complex conjugate spectrum.

The IFFT 30 according to an embodiment of the present invention may convert a signal outputted from the multiplier 240 into a time domain.

The IFFT 30 according to an embodiment may convert a signal received from the multiplier 240 into a time domain signal. At this time, the IFFT 30 may check whether the signal is orthogonal. For example, the IFFT 30 may convert the number of complex data points representing a signal in the frequency domain into a time domain signal of the same point.

The non-coherent block unit 900 according to an embodiment of the present invention may prevent noise of multiple paths, thereby increasing the signal-to-noise ratio (SNR) of the accumulated correlation value.

The maximum signal verification unit 300 according to an embodiment of the present invention may identify a time value corresponding to the correlation value that is calculated by the non-coherent block unit 900 and exceeds a predetermined reference value.

The least square calculation unit 400 according to various embodiments of the present invention may calculate at least one of a frequency value and a phase value, based on the identified time value, and deliver the calculated value(s) to the reference signal generation unit 500. The least square calculation unit 400 according to an embodiment may calculate at least one of the frequency value and the phase value, based on a least square method (LSM).

The least square calculation unit 400 according to an embodiment of the present invention may calculate a frequency (F) and a phase (Φ) through the following Equations 1 and 2. This frequency may be a repetition frequency, which may be repetitively represented by finding an accumulated correlation value. For example, when a signal is repeatedly transmitted from the outside, the maximum value of a correlation value is also repeated. In this case, the time value when the correlation value is the maximum may be repeated in a regular cycle. This cycle may mean the above frequency (F), which may be calculated by the least square calculation unit 400.

In the following Equations 1 and 2, "ti" is a time value received from the maximum signal verification unit 300, "i" is a sequence value, and "k" is a reference time value (e.g., the total number of times when the frequency and the phase are calculated by the least square calculation unit). [Equation 1] ${F}^{˜} = \frac{\left(k+1\right) \left({\sum }_{i = 0}^{i = k} i ⋅ {t}_{i}\right) - {\sum }_{i = 0}^{i = k} i ⋅ {\sum }_{i = 0}^{i = k} {t}_{i}}{\left(k+1\right) \left({\sum }_{i = 0}^{i = k} {t}_{i}^{2}\right) - {\left({\sum }_{i = 0}^{i = k} {t}_{i}\right)}^{2}}$ [Equation 2] ${φ}^{˜} = 2 π ⋅ \frac{1}{k + 1} ⋅ \left({\sum }_{i = 0}^{i = k} i - {F}^{˜} ⋅ {\sum }_{i = 0}^{i = k} {t}_{i}\right)$

The least square calculation unit 400 according to an embodiment of the present invention may calculate the frequency and phase values through Equations 1 and 2 and deliver the calculated values to the reference signal generation unit 500.

The reference signal generation unit 500 according to an embodiment of the present invention may generate a reference signal, based on a signal received from the least square calculation unit 400.

The reference signal generation unit 500 according to various embodiments of the present invention may generate the reference signal, based on frequency related values.

The second FFT 40 according to an embodiment of the present invention may receive the reference signal from the reference signal generation unit 500 and perform the Fourier transform to the frequency domain. The second FFT 40 according to an embodiment may deliver the Fourier-transformed signal to the multiplier 240.

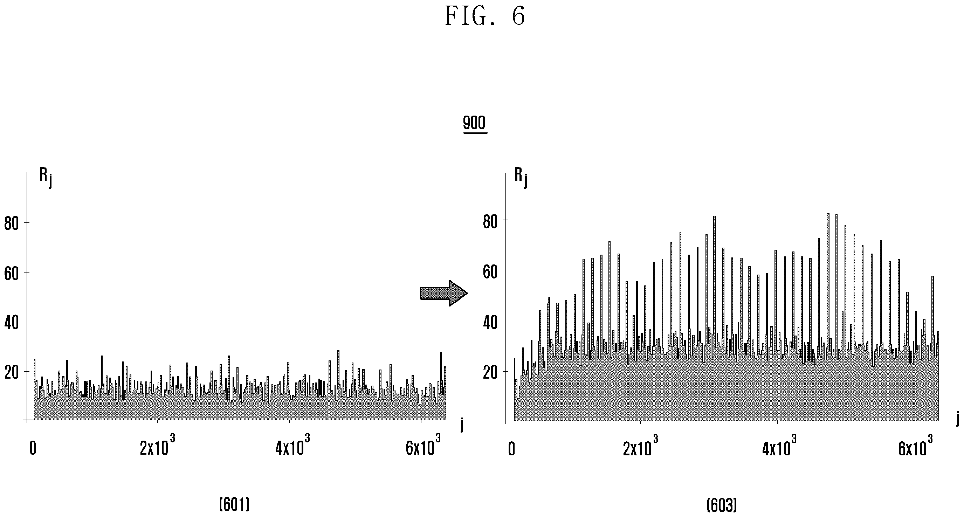

FIG. 6 shows a resultant screen by a non-coherent block unit 900 according to various embodiments of the present invention.

A reference numeral 601 indicates a signal that passes through the IFFT 30 according to an embodiment of the present invention.

As indicated by a reference number 603, when the signal received from the IFFT 30 is filtered by the non-coherent block unit 900, the SNR of the accumulated correlation value may be increased.

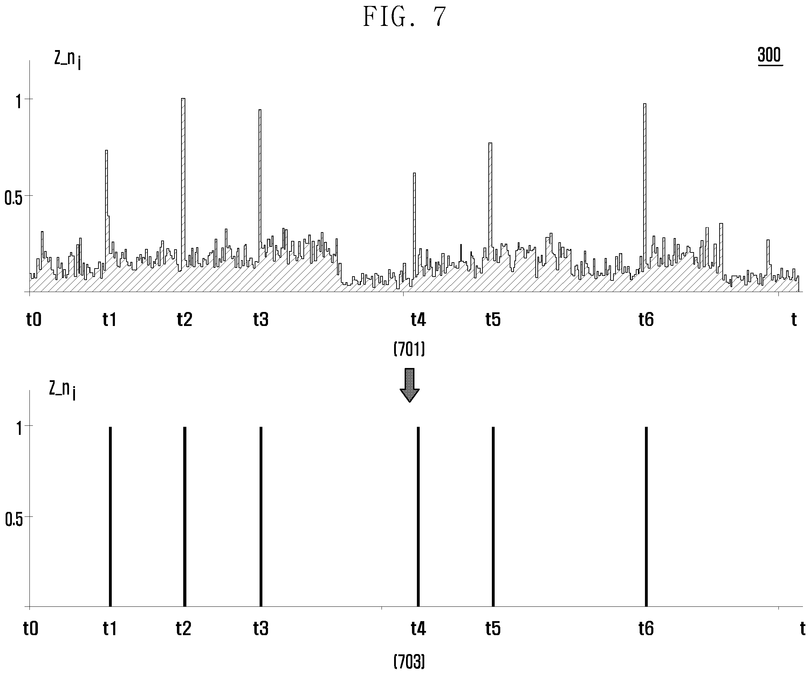

FIG. 7 shows a resultant screen by a maximum signal verification unit 300 according to various embodiments of the present invention.

A reference numeral 701 indicates a signal outputted by the non-coherent block unit 900.

As indicated by a reference number 703, the maximum signal verification unit 300 according to an embodiment of the present invention may analyze the signal received from the non-coherent block unit 900. The maximum signal verification unit 300 according to an embodiment may perform a binary operation, based on a reference threshold value predetermined for the correlation value. For example, the maximum signal verification unit 300 may output a signal "1" in case of exceeding the reference threshold value and output a signal "0" in case of not exceeding the threshold value.

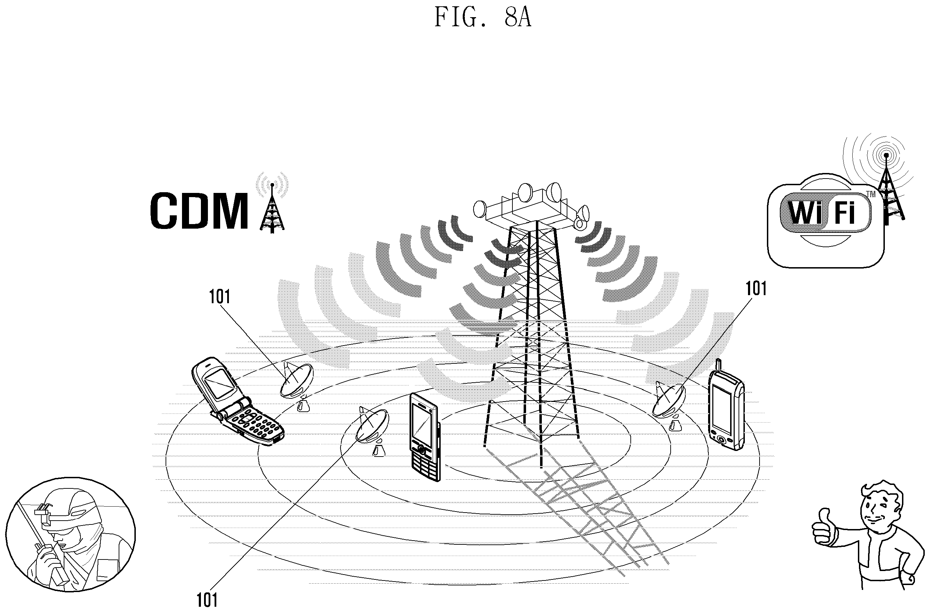

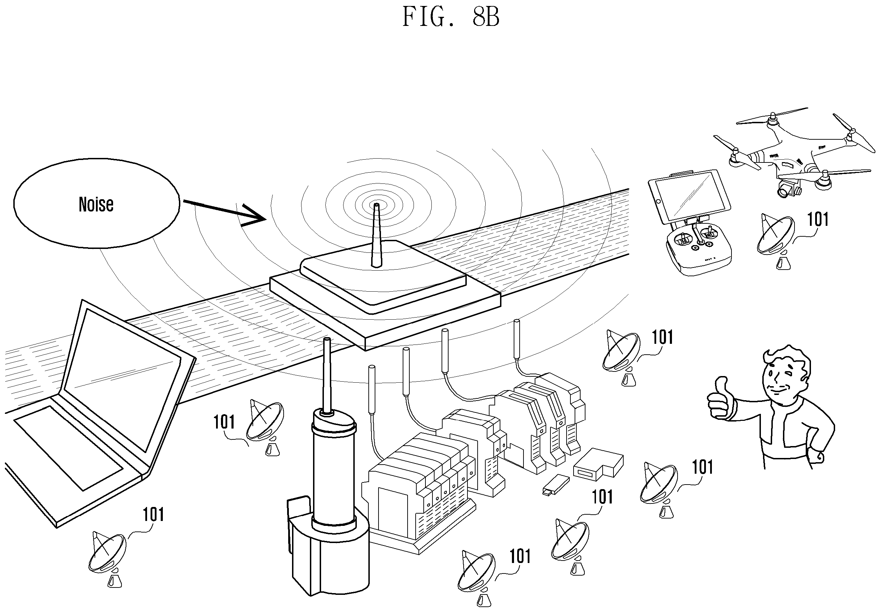

FIGS. 8A to 8D show utilizing examples of an electronic apparatus 101 according to various embodiments of the present invention.

In FIGS. 8A to 8D, the electronic apparatus 101 according to an embodiment may include at least one of a smart phone, a tablet personal computer (PC), a mobile phone, a video phone, an e-book reader, a desktop PC, a laptop PC, a netbook computer, a workstation, a server, a personal digital assistant (PDA), a portable multimedia player (PMP), an MP3 player, a portable medical device, a digital camera, or a wearable device. According to various embodiments, the wearable device may include at least one of an accessory-type device (e.g., a watch, a ring, a bracelet, an anklet, a necklace, glasses, a contact lens, or a head-mounted device (HMD), a fabric- or cloth-type device (e.g., electronic cloth), a body-attached type device (e.g., a skin pad or tattoo), or a body-implemented type circuit.

The electronic apparatus 101 according to an embodiment may be home appliance. For example, the home appliance may include at least one of a TV, a digital video disk (DVD) player, audio equipment, a refrigerator, an air conditioner, a vacuum cleaner, an oven, a microwave, a washing machine, an air cleaner, a set-top box, a home automation control panel, a security control panel, a media box (e.g., Samsung HomeSync™, Apple TV™, or Google TV™), a game console (e.g., Xbox™, PlayStation™), an electronic dictionary, an electronic key, a camcorder, or an electronic picture frame.

In another embodiment, the electronic apparatus 101 may include at least one of a medical device (e.g., portable medical measuring equipment (e.g., a blood sugar meter, a heart rate meter, a blood pressure meter, a clinical thermometer, etc.), a magnetic resonance angiography (MRA), a magnetic resonance imaging (MRI), a computed tomography (CT), an ultrasonography, etc.), a navigation device, a global navigation satellite system (GNSS), an event data recorder (EDR), a flight data recorder (FDR), a car infotainment device, electronic equipment for ship (e.g., a marine navigation system, a gyrocompass, etc.), avionics, security equipment, a car head unit, an industrial or home robot, a drone, an automated teller machine (ATM), a point of sales (POS), or a device for internet of things (IoT) (e.g., a bulb, a sensor, a sprinkler, a fire alarm, a thermostat, a streetlight, a toaster, athletic equipment, a hot-water tank, a heater, a boiler, etc.).

The electronic apparatus 101 according to an embodiment may be include at least one of furniture, a part of a building/construction or car, an electronic board, an electronic signature receiving device, a projector, or various measuring instruments (e.g., a water meter, an electric meter, a gas meter, a wave meter, etc.). In various embodiments, the electronic apparatus 101 may be one of the above-mentioned apparatuses or a combination thereof. In some embodiments, the electronic apparatus 101 may be a flexible electronic device. In addition, the electronic apparatus 101 according to embodiments disclosed herein is not limited to the above-mentioned devices and may include new electronic devices to be launched with the growth of technology.

The electronic apparatus 101 according to an embodiment of the present invention may utilize various kinds of communication. For example, at least one of long-term evolution (LTE), LTE advanced (LTE-A), code division multiple access (CDMA), wideband CDMA (WCDMA), universal mobile telecommunications system (UMTS), wireless broadband (WiBro), or global system for mobile communications (GSM) may be used as a cellular communication protocol. In addition, wireless communication may include, for example, short-range communication, which may include at least one of, for example, wireless fidelity (WiFi), Bluetooth, near field communication (NFC), or global navigation satellite system (GNSS). Depending on a used area or bandwidth, the GNSS may include at least one of, for example, global positioning system (GPS), global navigation satellite system (Glonass), Beidou navigation satellite system (Beidou), or European global satellite-based navigation system (Galileo). Hereinafter, in this disclosure, "GPS" may be interchangeably used with "GNSS". Wired communication may include at least one of, for example, a universal serial bus (USB), a high definition multimedia interface (HDMI), a recommended standard 232 (RS-232), or plain old telephone service (POTS). The network 162 may include at least one of a telecommunications network, for example, a computer network (e.g., LAN or WAN), the Internet, or a telephone network.

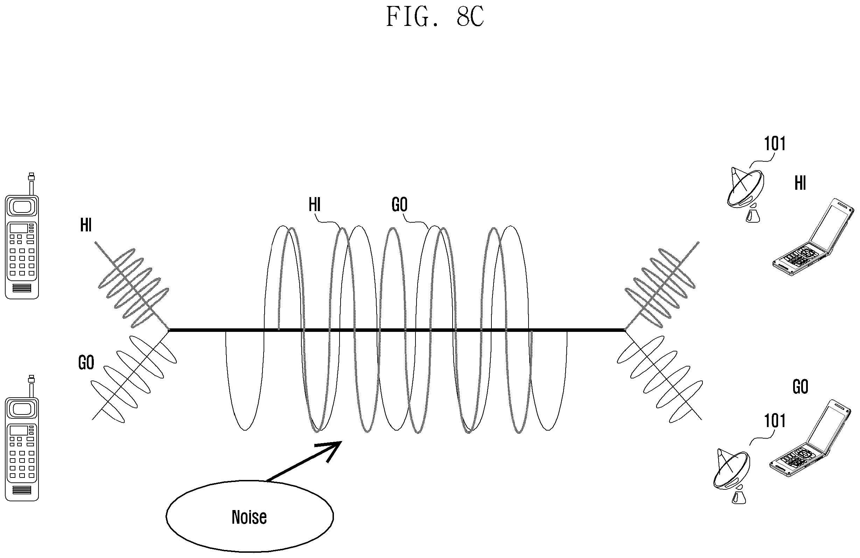

FIG. 8C is a diagram illustrating signal acquisition of the electronic apparatus 101 which is a mobile terminal according to various embodiments. For example, when a first device (e.g., a mobile terminal or the like) transmits a "HI" signal, a second device (e.g., a mobile terminal or the like) that corresponds to the first device may receive the "HI" signal through the apparatus of the present invention.

In a further example, when a third device (e.g., a mobile terminal or the like) transmits a "GO" signal, a fourth device (e.g., a mobile terminal or the like) may receive the "GO" signal through the apparatus of the present invention.

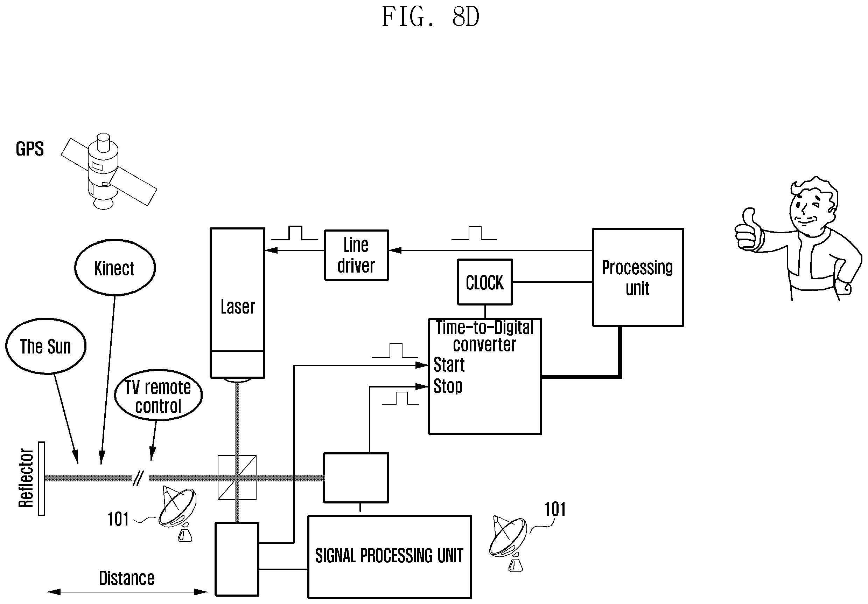

FIG. 8D illustrates an example of utilizing the electronic apparatus 101 according to an embodiment of the present invention. The electronic apparatus 101 according to an embodiment may be utilized in sensing devices, GPS applications, and radio measurement devices. For example, utilizing the apparatus according to an embodiment of the present invention, it is possible to receive and process a TV remote control signal, a Kinect sensor signal, and the rays of the sun. Based on the processed signal, it is possible to acquire a desired signal through a clock generator, a line driver, or the like.

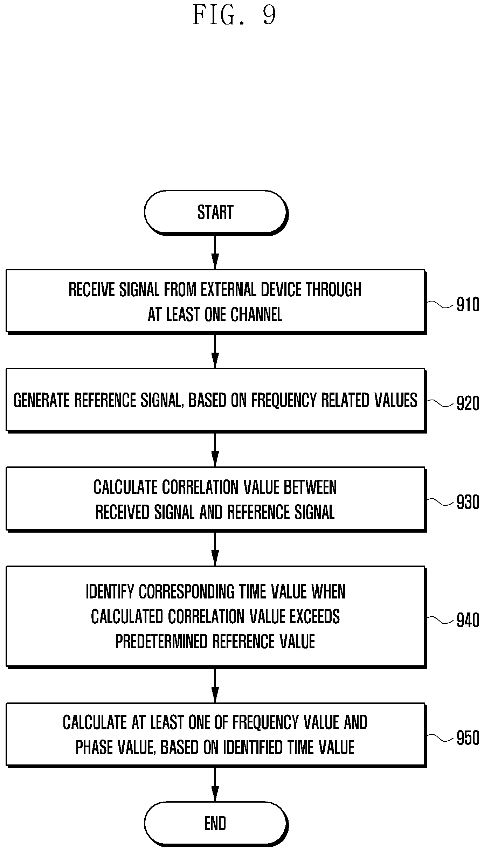

FIG. 9 is a flow diagram for signal acquisition of an electronic apparatus 101 according to various embodiments of the present invention.

At operation 910, the electronic apparatus 101 receives a signal from an external device through at least one channel. According to an embodiment, the antenna 100 may receive a signal from an external device through at least one channel.

At operation 920, the electronic apparatus 101 generates a reference signal, based on frequency related values. According to an embodiment, the reference signal generation unit 500 may receive at least one of a frequency value and a phase value from the least square calculation unit 400.

At operation 930, the electronic apparatus 101 calculates a correlation value between the received signal and the reference signal. According to an embodiment, the signal correlation unit 200 may include a multi-channel correlator for correlating the received signal with the reference signal, and a filter for eliminating narrowband interference. The filter according to an embodiment may remove narrowband interference, based on a threshold value of narrowband harmonic noise or a bandwidth of noise.

According to an embodiment, the signal correlation unit 200 may calculate the correlation value when a signal energy is accumulated in the plurality of channels and repeatability of a time position having the maximum correlation value is detected by the maximum signal verification unit 300 and the least square calculation unit 400.

At operation 940, the electronic apparatus 101 identifies a time value corresponding to the correlation value that is calculated by the signal correlation unit 200 and exceeds a predetermined reference value.

At operation 950, the electronic apparatus 101 calculates at least one of a frequency value and a phase value, based on the identified time value. According to an embodiment, the least square calculation unit 400 may calculate at least one of the frequency value and the phase value, based on a least square method (LSM). For example, the LSM may be based on the identified time value, a value corresponding to a reference time, and a time sequence value.

According to an embodiment, through the non-coherent block unit 900, the electronic apparatus 101 may prevent propagation effects of the correlation value calculated by the signal correlation unit 200.

According to an embodiment, the electronic apparatus 101 may acquire a signal, based on the calculated correlation value.

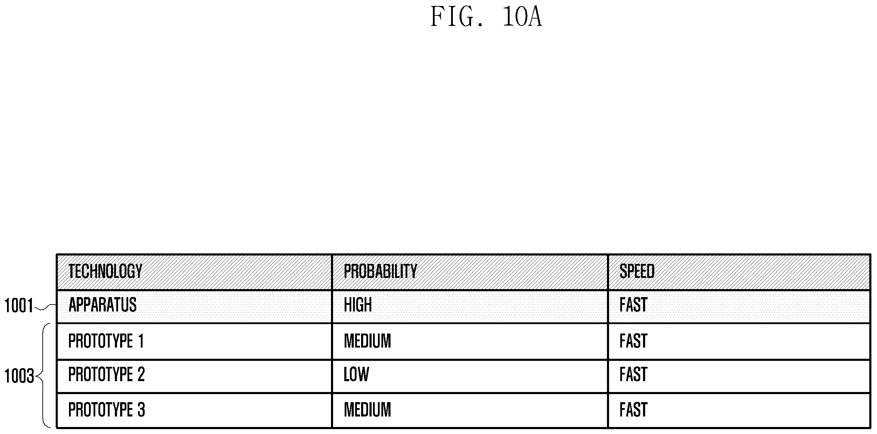

FIGS. 10A to 10C show results of signal acquisition of an electronic apparatus 101 according to various embodiments of the present invention.

FIG. 10A shows a table relating to signal verification by the electronic apparatus 101 of the present invention. As indicated by 1001, the electronic apparatus 101 according to an embodiment has a higher probability of finding a desired signal (e.g., a true signal) than comparison techniques. Here, the comparison techniques are based on the "threshold-based" algorithm, the "m-fold consecutive repetitions" algorithm, and the "k of n" algorithm. For clarity of explanation of the present invention, descriptions of algorithms related to the comparison techniques are omitted.

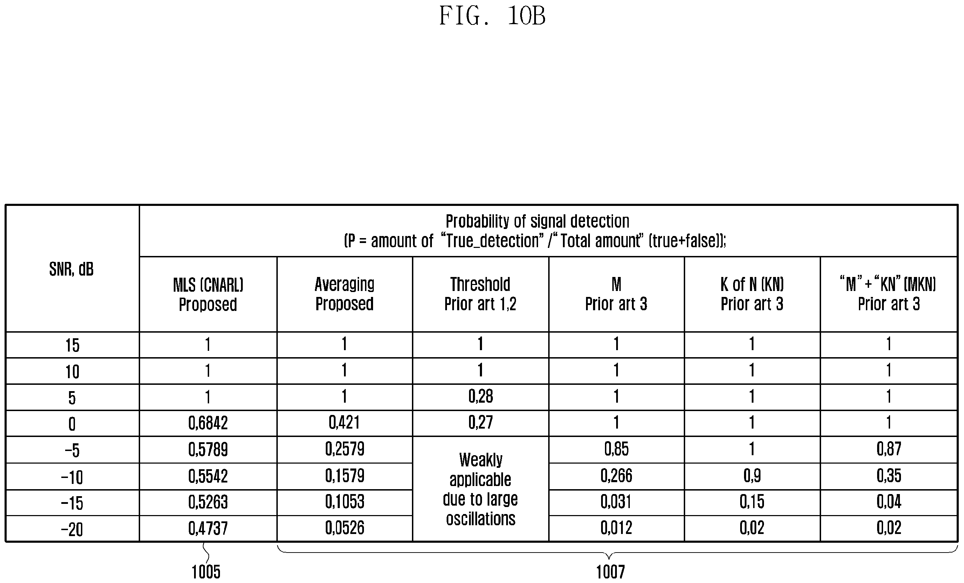

FIG. 10B is a table showing a signal-to-noise ratio (SNR) and a probability of signal acquisition. As indicated by 1005, various embodiments according to the present disclosure have a higher probability of signal acquisition detection compared to comparison techniques. Here, the comparison techniques are based on the "threshold-based" algorithm, the "m-fold consecutive repetitions" algorithm, and the "k of n" algorithm.

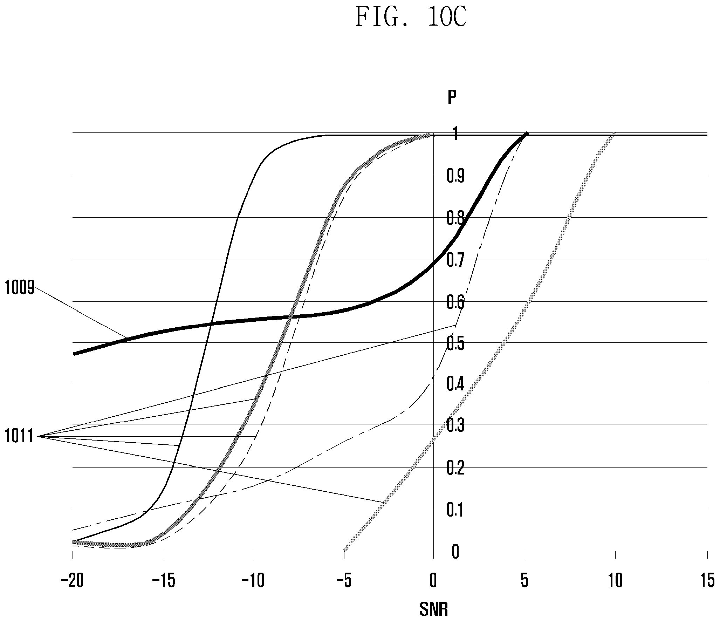

Referring to FIG. 10C, a reference numeral 1009 denotes a SNR graph of the electronic apparatus 101, and a reference numeral 1011 denotes the SNRs checked by applying comparison techniques based on the "threshold-based" algorithm, the "m-fold consecutive repetitions" algorithm, and the "k of n" algorithm.

The term "module" used in this disclosure may mean a unit including, for example, one or a combination of hardware, software, and firmware. The term "module" may be interchangeably used with other terms, for example, such as unit, logic, logical block, component, or circuit. The "module" may be the minimum unit, or a part thereof, of an integrally constructed component. The "module" may be the minimum unit, or a part thereof, for performing one or more functions. The "module" may be implemented mechanically or electronically. For example, according to the present disclosure, the "module" may include at least one of an application-specific integrated circuit (ASIC) chip, field-programmable gate arrays (FPGAs), and a programmable-logic device, which are known or to be developed later and perform particular functions.

According to various embodiments, at least a part of the device (e.g., modules or functions thereof) or the method (e.g., operations) may be implemented, for example, as instructions stored in a non-transitory computer-readable storage medium in a programming module form. When the instructions are executed by a processor, the processor may execute a function corresponding to the instructions. The computer-readable storage medium may be, for example, the memory.

The non-transitory computer-readable recording medium may include magnetic media such as a hard disk, a floppy disk, and a magnetic tape, optical media such as a Compact Disc Read Only Memory (CD-ROM) and a Digital Versatile Disc (DVD), magneto-optical media such as a floptical disk, and hardware devices (e.g., read only memory (ROM), random access memory (RAM), or flash memory). In addition, program instructions may include high class language codes, which can be executed in a computer by using an interpreter, as well as machine codes made by a compiler. The hardware devices described above may be configured to operate as one or more software modules to perform the operations of various embodiments, and vice versa.

A module or programming module according to various embodiments may include or exclude at least one of the above-discussed components or further include any other component. The operations performed by the module, programming module, or any other component according to various embodiments may be executed sequentially, in parallel, repeatedly, or by a heuristic method. Additionally, some operations may be executed in different orders or omitted, or any other operation may be added.

## Claims

1. An electronic apparatus (101) comprising:
an antenna (100) arranged to receive a first signal from an external device through at least one channel;
a reference signal generation unit (500) arranged to generate a reference signal, based on a second signal received from a least square calculation unit (400) and comprising a frequency related value, and deliver the reference signal to a signal correlation unit (200);
the signal correlation unit (200) arranged to calculate a correlation value between the received first signal and the reference signal;
a maximum signal verification unit (300) arranged to identify a time value corresponding to a correlation value exceeding a predetermined reference value from among the correlation values calculated by the signal correlation unit (200), and deliver the identified time value to the least square calculation unit (400); and
the least square calculation unit (400) arranged to calculate a frequency value corresponding to a cycle of transmission of a signal received from the external device, based on the identified time value, and deliver the second signal comprising the calculated frequency value or a phase value calculated based on the calculated frequency value to the reference signal generation unit (500).

2. The electronic apparatus (101) of claim 1, further comprising:
a signal processing unit (600) arranged to process the received first signal, based on the correlation value calculated from the signal correlation unit (200).

3. The electronic apparatus (101) of claim 2, wherein the signal correlation unit (200) includes:
a multiplier (240) arranged to perform a cross-correlation between the received first signal and the reference signal; and
a filter (230) arranged to filter narrowband interference.

4. The electronic apparatus (101) of claim 3, wherein the filter (230) is arranged to remove the narrowband interference, based on a threshold value of narrowband harmonic noise or a bandwidth of noise.

5. The electronic apparatus (101) of claim 1, wherein the signal correlation unit (200) is arranged to calculate the correlation value, based on detection of repeatability of a time position where the correlation value is maximized and signal energy accumulated in a plurality of channels by the maximum signal verification unit (300) and the least square calculation unit (400).

6. The electronic apparatus (101) of claim 1, wherein the least square calculation unit (400) is arranged to calculate the frequency value based on a least square method 'LSM'.

7. The electronic apparatus (101) of claim 6, wherein the LSM is based on the identified time value, a value corresponding to a reference time, and a time sequence value.

8. A signal acquisition method of an electronic apparatus (101), comprising operations of:
receiving (910) a first signal from an external device through at least one channel;
generating (920), by a reference signal generation unit (500) of the electronic apparatus (101), a reference signal, based on a second signal received from a least square calculation unit (400) of the electronic apparatus (101) and comprising a frequency related value;
calculating (930) a correlation value between the received first signal and the reference signal;
identifying (940) a time value corresponding to a correlation value exceeding a predetermined reference value from among the calculated correlation values; and
calculating (950), by the least square calculation unit (400), a frequency value corresponding to a cycle of transmission of a signal received from the external device , based on the identified time value; and
delivering, to the reference signal generation unit (500), the second signal comprising the calculated frequency value or a phase value calculated based on the calculated frequency value.

9. The method of claim 8, further comprising operation of:
processing the received first signal, based on the calculated correlation value.

10. The method of claim 9, wherein the operation of calculating a correlation value includes operations of:
performing a cross-correlation between the received first signal and the reference signal; and
filtering narrowband interference.

11. The method of claim 10, wherein the operation of filtering narrowband interference includes operation of removing the narrowband interference, based on a threshold value of narrowband harmonic noise or a bandwidth of noise.

12. The method of claim 8, wherein the operation of calculating a correlation value includes operation of calculating the correlation value, based on detection of repeatability of a time position where the correlation value is maximized and signal energy accumulated in a plurality of channels by the maximum signal verification unit and the least square calculation unit.

13. The method of claim 8, wherein the operation of calculating the frequency value is performed based on a least square method 'LSM'.

## Patentansprüche

1. Elektronische Vorrichtung (101), umfassend:
eine Antenne (100), die angeordnet ist, um ein erstes Signal von einer externen Einrichtung durch zumindest einen Kanal zu empfangen;
eine Referenzsignalerzeugungseinheit (500), die angeordnet ist, um ein Referenzsignal zu erzeugen, basierend auf einem zweiten Signal, das von einer Berechnungseinheit für kleinste Quadrate (400) empfangen wird und einen frequenzbezogenen Wert umfassend;
und Liefern des Referenzsignals an eine Signalkorrelationseinheit (200);
wobei die Signalkorrelationseinheit (200) angeordnet ist, um einen Korrelationswert zwischen dem empfangenen ersten Signal und dem Referenzsignal zu berechnen;
eine Maximalsignalverifizierungseinheit (300), die angeordnet ist, um einen Zeitwert, der einem Korrelationswert entspricht, der einen vorbestimmten Referenzwert überschreitet, aus den Korrelationswerten zu identifizieren, die durch die Signalkorrelationseinheit (200) berechnet werden, und den identifizierten Zeitwert an die Berechnungseinheit für kleinste Quadrate (400) zu liefern; und
die Berechnungseinheit für kleinste Quadrate (400) angeordnet ist, um einen Frequenzwert zu berechnen, der einem Übertragungszyklus eines Signals entspricht, das von der externen Einrichtung empfangen wird, basierend auf dem identifizierten Zeitwert, und das zweite Signal, das den berechneten Frequenzwert oder einen Phasenwert umfasst, der basierend auf dem berechneten Frequenzwert berechnet wird, an die Referenzsignalerzeugungseinheit (500) zu liefern.

2. Elektronische Vorrichtung (101) nach Anspruch 1, ferner umfassend:
eine Signalverarbeitungseinheit (600), die angeordnet ist, um das empfangene erste Signal zu verarbeiten, basierend auf dem Korrelationswert, der aus der Signalkorrelationseinheit (200) berechnet wird.

3. Elektronische Vorrichtung (101) nach Anspruch 2, wobei die Signalkorrelationseinheit (200) Folgendes beinhaltet:
einen Multiplikator (240), der angeordnet ist, um eine Kreuzkorrelation zwischen dem empfangenen ersten Signal und dem Referenzsignal durchzuführen; und
einen Filter (230), der angeordnet ist, um Schmalbandinterferenz zu filtern.

4. Elektronische Vorrichtung (101) nach Anspruch 3, wobei der Filter (230) angeordnet ist, um die Schmalbandinterferenz zu entfernen, basierend auf einem Schwellenwert von Schmalbandoberwellenrauschen oder einer Rauschbandbreite.

5. Elektronische Vorrichtung (101) nach Anspruch 1, wobei die Signalkorrelationseinheit (200) angeordnet ist, um den Korrelationswert zu berechnen, basierend auf Erfassung der Wiederholbarkeit einer Zeitposition, bei welcher der Korrelationswert maximiert ist, und Signalenergie akkumuliert in einer Vielzahl von Kanälen durch die Maximalsignalverifizierungseinheit (300) und die Berechnungseinheit für kleinste Quadrate (400).

6. Elektronische Vorrichtung (101) nach Anspruch 1, wobei die Berechnungseinheit für kleinste Quadrate (400) angeordnet ist, um den Frequenzwert basierend auf einem Verfahren für kleinste Quadrate "LSM" zu berechnen.

7. Elektronische Vorrichtung (101) nach Anspruch 6, wobei das LSM auf dem identifizierten Zeitwert, einem Wert, der einer Referenzzeit entspricht, und einem Zeitsequenzwert basiert.

8. Signalerwerbsverfahren einer elektronischen Vorrichtung (101), umfassend folgende Vorgänge:
Empfangen (910) eines ersten Signals von einer externen Einrichtung durch zumindest einen Kanal;
Erzeugen (920), durch eine Referenzsignalerzeugungseinheit (500) der elektronischen Vorrichtung (101), eines Referenzsignals, basierend auf einem zweiten Signal, das von einer Berechnungseinheit für kleinste Quadrate (400) der elektronischen Vorrichtung (101) empfangen wird und einen frequenzbezogenen Wert umfassend;
Berechnen (930) eines Korrelationswertes zwischen dem empfangenen ersten Signal und dem Referenzsignal;
Identifizieren (940) eines Zeitwertes, der einem Korrelationswert entspricht, der einen vorbestimmten Referenzwert überschreitet, aus den berechneten Korrelationswerten; und
Berechnen (950), durch die Berechnungseinheit für kleinste Quadrate (400), eines Frequenzwertes, der einem Übertragungszyklus eines Signals entspricht, das von der externen Einrichtung empfangen wird, basierend auf dem identifizierten Zeitwert; und
Liefern, an die Referenzsignalerzeugungseinheit (500), des zweiten Signals, das den berechneten Frequenzwert oder einen Phasenwert umfasst, der basierend auf dem berechneten Frequenzwert berechnet wird.

9. Verfahren nach Anspruch 8, ferner umfassend folgende Vorgänge:
Verarbeiten des empfangenen ersten Signals basierend auf dem berechneten Korrelationswert.

10. Verfahren nach Anspruch 9, wobei der Vorgang des Berechnens eines Korrelationswertes folgende Vorgänge beinhaltet:
Durchführen einer Kreuzkorrelation zwischen dem empfangenen ersten Signal und dem Referenzsignal; und
Filtern von Schmalbandinterferenz.

11. Verfahren nach Anspruch 10, wobei der Vorgang des Filterns von Schmalbandinterferenz den Vorgang des Entfernens der Schmalbandinterferenz beinhaltet, basierend auf einem Schwellenwert von Schmalbandoberwellenrauschen oder einer Rauschbandbreite.

12. Verfahren nach Anspruch 8, wobei der Vorgang des Berechnens eines Korrelationswertes den Vorgang des Berechnens des Korrelationswertes beinhaltet, basierend auf Erfassung von Wiederholbarkeit einer Zeitposition, bei welcher der Korrelationswert maximiert ist, und Signalenergie akkumuliert in einer Vielzahl von Kanälen durch die Maximalsignalverifizierungseinheit und die Berechnungseinheit für kleinste Quadrate.

13. Verfahren nach Anspruch 8, wobei der Vorgang des Berechnens des Frequenzwertes basierend auf einem Verfahren für kleinsten Quadrate "LSM" durchgeführt wird.

## Revendications

1. Appareil électronique (101) comprenant :
une antenne (100) agencée pour recevoir un premier signal en provenance d'un dispositif externe par au moins un canal ;
une unité de génération de signal de référence (500) agencée pour générer un signal de référence, sur la base d'un second signal reçu en provenance d'une unité de calcul par la méthode des moindres carrés (400) et comprenant une valeur relative à la fréquence,
et délivrer le signal de référence à une unité de corrélation de signal (200) ;
l'unité de corrélation de signal (200) étant agencée pour calculer une valeur de corrélation entre le premier signal reçu et le signal de référence ;
une unité de vérification de signal maximal (300) agencée pour identifier une valeur de temps correspondant à une valeur de corrélation dépassant une valeur de référence prédéfinie parmi les valeurs de corrélation calculées par l'unité de corrélation de signal (200), et délivrer la valeur de temps identifiée à l'unité de calcul par la méthode des moindres carrés (400) ; et
l'unité de calcul par la méthode des moindres carrés (400) agencée pour calculer une valeur de fréquence correspondant à un cycle de transmission d'un signal reçu en provenance du dispositif externe, sur la base de la valeur de temps identifiée, et délivrer le second signal comprenant la valeur de fréquence calculée ou une valeur de phase calculée sur la base de la valeur de fréquence calculée à l'unité de génération de signal de référence (500).

2. Appareil électronique (101) selon la revendication 1, comprenant en outre :
une unité de traitement de signal (600) agencée pour traiter le premier signal reçu, sur la base de la valeur de corrélation calculée à partir de l'unité de corrélation de signal (200).

3. Appareil électronique (101) selon la revendication 2, ladite unité de corrélation de signal (200) comprenant :
un multiplicateur (240) agencé pour réaliser une corrélation croisée entre le premier signal reçu et le signal de référence ; et
un filtre (230) agencé pour filtrer les interférences à bande étroite.

4. Appareil électronique (101) selon la revendication 3, ledit filtre (230) étant agencé pour supprimer l'interférence à bande étroite, sur la base d'une valeur seuil de bruit harmonique à bande étroite ou d'une largeur de bande de bruit.

5. Appareil électronique (101) selon la revendication 1, ladite unité de corrélation de signal (200) étant agencée pour calculer la valeur de corrélation, sur la base de la détection de la répétabilité d'une position temporelle où la valeur de corrélation est maximisée et l'énergie de signal accumulée dans une pluralité de canaux par l'unité de vérification de signal maximal (300) et l'unité de calcul par la méthode des moindres carrés (400).

6. Appareil électronique (101) selon la revendication 1, ladite unité de calcul par la méthode des moindres carrés (400) étant agencée pour calculer la valeur de fréquence sur la base de la méthode des moindres carrés (LSM).

7. Appareil électronique (101) selon la revendication 6, ladite LSM étant basée sur la valeur de temps identifiée, une valeur correspondant à un temps de référence et une valeur de séquence de temps.

8. Procédé d'acquisition de signal d'un appareil électronique (101), comprenant des opérations de :
réception (910) d'un premier signal en provenance d'un dispositif externe par au moins un canal ;
génération (920), par une unité de génération de signal de référence (500) de l'appareil électronique (101), d'un signal de référence, sur la base d'un second signal reçu en provenance d'une unité de calcul par la méthode des moindres carrés (400) de l'appareil électronique (101) et comprenant une valeur relative à la fréquence ;
calcul (930) d'une valeur de corrélation entre le premier signal reçu et le signal de référence ;
identification (940) d'une valeur de temps correspondant à une valeur de corrélation dépassant une valeur de référence prédéfinie parmi les valeurs de corrélation calculées ; et
calcul (950), par l'unité de calcul par la méthode des moindres carrés (400), d'une valeur de fréquence correspondant à un cycle de transmission d'un signal reçu en provenance du dispositif externe, sur la base de la valeur de temps identifiée ; et
émission en sortie, vers l'unité de génération de signal de référence (500), du second signal comprenant la valeur de fréquence calculée ou une valeur de phase calculée sur la base de la valeur de fréquence calculée.

9. Procédé selon la revendication 8, comprenant en outre l'opération de :
traitement du premier signal reçu, sur la base de la valeur de corrélation calculée.

10. Procédé selon la revendication 9, ladite opération de calcul d'une valeur de corrélation comprenant des opérations de :
réalisation d'une corrélation croisée entre le premier signal reçu et le signal de référence ; et
filtrage d'interférence à bande étroite.

11. Procédé selon la revendication 10, ladite opération de filtrage d'interférence à bande étroite comprenant une opération de suppression de l'interférence à bande étroite, sur la base d'une valeur seuil de bruit harmonique à bande étroite ou d'une largeur de bande de bruit.

12. Procédé selon la revendication 8, ladite opération de calcul d'une valeur de corrélation comprenant l'opération de calcul de la valeur de corrélation, sur la base de la détection de la répétabilité d'une position temporelle où la valeur de corrélation est maximisée et de l'énergie de signal accumulée dans une pluralité de canaux par l'unité de vérification de signal maximal et l'unité de calcul par la méthode des moindres carrés.

13. Procédé selon la revendication 8, ladite opération de calcul de la valeur de fréquence étant réalisée sur la base de la méthode des moindres carrés (LSM).
